# EUROPEAN PATENT APPLICATION

(11) **EP 4 507 314 A1**
(43) Date of publication of application: **12.02.2025**
(21) Application number: 23784358.6
(22) Date of filing: 07.04.2023
(51) Int. Cl.: H04N 21/431

(54) **BULLET COMMENT INFORMATION DISPLAY METHOD AND APPARATUS BASED ON VIRTUAL REALITY, AND ELECTRONIC DEVICE**

(30) Priority: 08.04.2022 CN 202210369697
(71) Applicant: Beijing Zitiao Network Technology Co., Ltd., Beijing 100190 (CN)
(72) Inventor: WU, Peipei, Beijing 100028 (CN); ZHAO, Wenhun, Beijing 100028 (CN); WU, Yuhan, Beijing 100028 (CN); JI, Liyue, Beijing 100028 (CN); ZHAO, Dongyang, Beijing 100028 (CN); CHEN, Jingfu, Beijing 100028 (CN); TU, Mengqi, Beijing 100028 (CN); TANG, Wencheng, Beijing 100028 (CN); QU, Cheng, Beijing 100028 (CN)
(74) Representative: Dentons UK and Middle East LLP
(86) International application number: PCT/CN2023/086925
(87) International publication number: WO 2023/193796

(57) **Abstract**

The present disclosure relates to the technical field of virtual reality, and relates to a bullet comment information display method and apparatus based on virtual reality, and an electronic device. The method comprises: entering a virtual reality space, and then receiving, from a user, an instruction to enable bullet comment display; firstly, acquiring bullet comment information to be displayed; then determining a bullet comment display region in the virtual reality space, wherein the bullet comment display region and a content presentation region for the virtual reality are respectively located at different regional positions in the virtual reality space; and then displaying the bullet comment information in the bullet comment display region. By means of applying the technical solution of the present disclosure, a user in a virtual reality environment can experience a bullet comment interaction service whilst viewing a VR live broadcast, etc., and can participate in bullet comment interaction in real time together with other users, thereby improving the VR usage experience of the user.

## Description

### CROSS-REFERENCE TO RELATED APPLICATIONS

The present disclosure is based on and claims priority to the Chinese Patent Application No. 202210369697.4 filed on April 8, 2022 and entitled "BULLET COMMENT INFORMATION DISPLAY METHOD BASED ON VIRTUAL REALITY AND APPARATUS AND ELECTRONIC DEVICE", the present disclosure of which is incorporated by reference herein in its entirety.

### TECHNICAL FIELD

The present disclosure relates to the technical field of virtual reality, and in particular, to a bullet comment information display method based on virtual reality and apparatus, and an electronic device.

### BACKGROUND

Virtual Reality (VR) live is a combination of Virtual Reality and live. Compared with watching traditional television, a biggest difference of the VR live is to let audiences be personally on the scene, realizing real-time all-round experience.

At present, bullet comment interactive demands of users in the process of watching VR live cannot be met in the prior art, influencing the VR usage experience of the users.

### SUMMARY

In view of this, the present disclosure provides a bullet comment information display method based on virtual reality and apparatus, and an electronic device, mainly for solving the technical problem that, at present, bullet comment interactive demands of users in the process of watching VR live cannot be met in the prior art, influencing the VR usage experience of the users.

In a first aspect, the present disclosure provides a bullet comment information display method based on virtual reality, comprising:
entering a virtual reality space, and receiving, from a user, an instruction to enable bullet comment display;
acquiring bullet comment information to be displayed;
determining a bullet comment display region in the virtual reality space, wherein the bullet comment display region and a content presentation region for the virtual reality are respectively located at different region positions in the virtual reality space; and
displaying the bullet comment information in the bullet comment display region.

In a second aspect, the present disclosure provides a bullet comment information display apparatus based on virtual reality, comprising:
a receiving module configured to, enter a virtual reality space, and receive, from a user, an instruction to enable bullet comment display;
an acquiring module configured to, acquire bullet comment information to be displayed;
a determining module configured to, determine a bullet comment display region in the virtual reality space, wherein the bullet comment display region and a content presentation region for the virtual reality are respectively located at different region positions in the virtual reality space; and
a display module configured to, display the bullet comment information in the bullet comment display region.

In a third aspect, the present disclosure provides a computer-readable storage medium having thereon stored a computer program, which, when executed by a processor, implements the bullet comment information display method based on virtual reality of the first aspect.

In a fourth aspect, the present disclosure provides an electronic device, comprising a storage medium, a processor, and a computer program stored on the storage medium and executable on the processor, the processor implementing the bullet comment information display method based on virtual reality of the first aspect when executing the computer program.

By means of the above technical solutions, compared with the prior art, the bullet comment information display method and apparatus based on virtual reality and the electronic device according to the present disclosure can provide bullet comment interactive demands for users in the process of watching VR live and the like. Specifically, after the VR device is used and enters a virtual reality space, in response to an instruction to enable bullet comment display from a user, it first acquires bullet comment information to be displayed; then determines a bullet comment display region in the virtual reality space, wherein the bullet comment display region and a content presentation region for the virtual reality are respectively positioned at different region positions in the virtual reality space; and then displays the acquired bullet comment information in the bullet comment display region. With the technical solutions in the present application, users in the virtual reality environment are enabled to experience bullet comment interactive services in the process of watching VR live and the like, and are enabled to participate in bullet comment interactions in real time with other users together. Moreover, the bullet comment display region can be an independent presentation region in the virtual reality space, and does not have positional interference with other elements in the virtual reality scene, thereby bringing stronger science and technology feeling for the users; the bullet comment information can blend in better with the virtual reality space, which improves the user's sense of immersion and improves the VR usage experience of the user.

The foregoing is only an overview of the technical solutions of the present disclosure, and the embodiments of the present disclosure are described below in order that the technical means of the present disclosure can be more clearly learned and can be implemented according to the description, and the foregoing and other objectives, features, and advantages of the present disclosure can be more clearly understood.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

In order to more clearly illustrate the embodiments of the present disclosure or technical solutions in the prior art, the drawings used in the description of the embodiments or the prior art will be briefly described below, and it is obvious for those skilled in the art that other drawings can be obtained according to these drawings without creative labor.
Fig. 1 illustrates a schematic flowchart of a bullet comment information display method based on virtual reality according to an embodiment of the present disclosure;
Fig. 2 is a schematic flowchart illustrating another bullet comment information display method based on virtual reality according to an embodiment of the present disclosure;
Fig. 3 is a schematic diagram illustrating an example of a bullet comment display effect according to an embodiment of the present disclosure;
Fig. 4 is a schematic diagram illustrating an example of a bullet comment display effect of an application scenario according to an embodiment of the present disclosure;
Fig. 5 is a schematic diagram illustrating an example of a bullet comment display effect of another application scenario according to an embodiment of the present disclosure;
Fig. 6 is a schematic diagram illustrating an example of a bullet comment display effect of yet another application scenario according to an embodiment of the present disclosure;
Fig. 7 is a schematic structural diagram illustrating a bullet comment information display apparatus based on virtual reality according to an embodiment of the present disclosure.

### DETAILED DESCRIPTION

The embodiments of the present disclosure will be described in more detail below with reference to the accompanying drawings. It should be noted that, in the present disclosure, the embodiments and the features of the embodiments may be combined with each other without conflict.

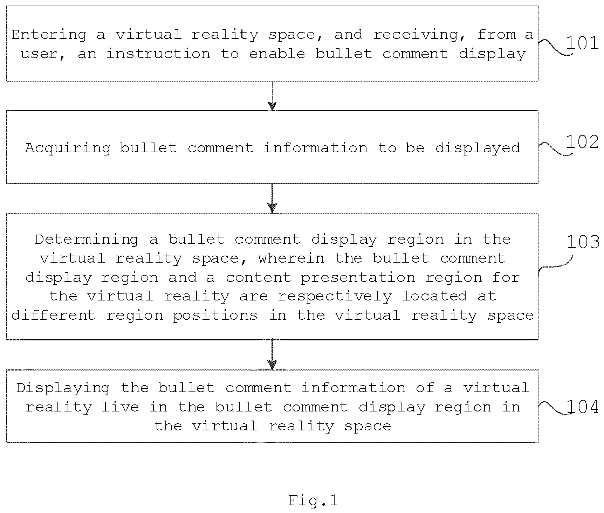

In order to solve the technical problem in the prior art that, at present, bullet comment interactive demands of users in the process of watching VR live cannot be met, thereby influencing the VR usage experience of the users, the embodiment provides a bullet comment information display method based on virtual reality, which, as shown in Fig. 1, can be applied to a VR device side, comprising:
step 101, entering a virtual reality space, and receiving, from a user, an instruction to enable bullet comment display.

For example, after a user enters a virtual reality space by using a VR device, the user can watch VR live in a virtual reality environment, for example, the user enters a virtual reality concert scene, and watch and listen to live performance content as if the user is on the scene.

Unlike the prior art, this embodiment can realize bullet comment interactions with respect to the VR live, and can present to the user, bullet comment information sent by users from different live rooms, and/or different users in a same live room with respect to same VR live content, in the form of a common screen, for bullet comment interactions, thereby providing bullet comment interactive demands in the process of watching the VR live for the user, such that the user in the virtual reality environment can experience bullet comment interactive services in the process of watching the VR live, and can participate in bullet comment interactions in real time with other users together.

In this embodiment, the user may input an instruction to enable bullet comment display by means of focus positioning, handle rays, etc., and the VR device side may receive the instruction and perform the bullet comment information display process shown in steps 102 to 104 according to the instruction.
step 102, acquiring bullet comment information to be displayed.

For example, the bullet comment information may include real-time comment information of different users on VR live content, or comment information on real-time bullet comment content sent by other users. Specifically, the bullet comment information may include information such as text, symbols, and expressions. In addition, according to actual needs, the bullet comment information may further include a user icon and/or user identification (such as user name, nickname) and the like sending the bullet comment, so that the user sees the user icon and/or the user identification sending the bullet comment together when seeing the bullet comment content.
step 103, determining a bullet comment display region in the virtual reality space.

The bullet comment display region and the content presentation region for the virtual reality (such as a performance stage or an exhibition booth in a VR form, so that a virtual character performs a VR performance on the performance stage or the exhibition booth) are respectively located at different region positions in the virtual reality space. Optionally, the different region positions here may specifically include: non-overlapping regions of the same plane of the virtual reality space, or different planes of the virtual reality space, etc. Unlike traditional video bullet comment display schemes, in this embodiment, bullet comment display region can be an independent presentation region in the virtual reality space, and does not have positional interference with other elements in the virtual reality scene, that is, the bullet comment display region, as an independent scene element, can be located at a different three-dimensional space position in virtual reality space with other scene elements, thereby bringing stronger science and technology feeling for the users. The bullet comment information can blend in better with the virtual reality space, which improves the user's sense of immersion and improves the VR usage experience of the user.

The position of bullet comment display region can be fixed in advance, or perhaps is selected and determined according to positions of scene elements (e.g., elements such as stage, booth, light and sound equipment, venue) in the virtual reality space, to reduce display interference of live bullet comment information to VR presentation content. Further optionally, the bullet comment display region may also be a region whose position is obtained by dynamic adjustment according to real-time positions of scene elements in the virtual reality space. For example, the bullet comment display region is adjusted following the change in real-time positions of specific scene elements in the virtual reality space, so as to adapt to different VR scene contents, and achieve a targeted optimal bullet comment display effect. If a performer performs on the stage, the bullet comment display region may be a specific region under the stage. If the performer moves offstage and interacts with offstage audiences, the bullet comment display region can be dynamically adjusted to another specific region, to avoid bullet comments from blocking the user watching interactive VR live content between the performer and the offstage audiences.
step 104, displaying bullet comment information of a virtual reality live in the bullet comment display region in the virtual reality space.

The form of presenting the bullet comment information can comprise: displaying each piece of trajectory information in a direction from right to left or from left to right and the like on a fixed trajectory, in the bullet comment display region. The number of trajectories side by side may be a limited number of trajectories, for example, 4 rows of trajectories at most, so that when a large number of bullet comments need to be displayed, 4 rows of bullet comment information may be displayed side by side, and when the number of bullet comments is small, each bullet comment information may be displayed through only 1 to 2 trajectories, etc. As for a bullet comment display region provided under the stage, a bullet comment appears from right to left in the lowermost row of trajectories, and as the number of bullet comments increases, upper rows of the trajectories may be dynamically used sequentially upward, to timely display increased bullet comment information. In this optional manner, the display interference of the bullet comment information to the stage presentation content can be reduced as much as possible, to guarantee the effect of watching the VR live content by the user.

A upper limit number of the trajectories may be determined according to a size of the bullet comment display region, for example, at most 3 rows of trajectories may be displayed in the currently determined bullet comment display region, and then, when the size of the bullet comment display region changes, corresponding adjustment may be made, for example, at most 5 rows of trajectories may be displayed after the bullet comment display region becomes larger. In this optional manner of dynamically adjusting the number of trajectories, the adaptability adjustment under different VR scene contents can be realized, thereby realizing the targeted optimal bullet comment display effect. When the number of the bullet comments is large, the bullet comment information is displayed as timely as possible through more trajectories.

For this embodiment, in addition to the number and direction of the trajectories, corresponding bullet comment parameters shall be preset, to guarantee good demonstration of the bullet comment effect. For example, bullet comment parameters, such as bullet comment font, font size, color value, transparency, text-shadow, background, padding, maximum length, expression size, bullet comment density, bullet comment angle, up-down spacing, left-right spacing, etc., are set.

It should be noted that, the method of this embodiment may be applied to not only bullet comment interactions for VR live, but also bullet comment interactions for VR video or VR game, and may be specifically selected for use according to actual requirements.

Compared with the prior art, the bullet comment information display method based on virtual reality provided by the embodiment can provide bullet comment interactive demands for users in the process of watching VR live and the like. With the technical solution in the embodiment of the present application, users in the virtual reality environment are enabled to experience bullet comment interactive services in the process of watching VR live and the like, and are enabled to participate in bullet comment interactions in real time with other users together. Moreover, the bullet comment display region can be an independent presentation region in the virtual reality space, and does not have positional interference with other elements in the virtual reality scene, thereby bringing stronger science and technology feeling for the users. The bullet comment information can blend in better with the virtual reality space, which improves the user's sense of immersion and improves the VR usage experience of the user.

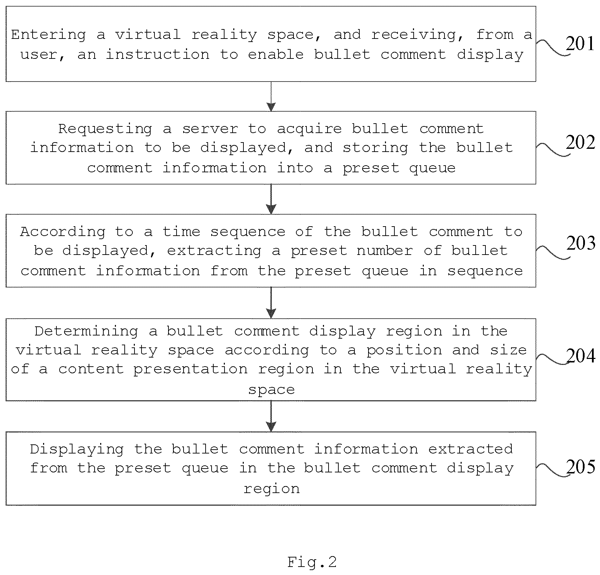

Further, as a refinement and an extension of the foregoing embodiment, in order to fully describe a specific implementation process of the method of the present embodiment, the present embodiment provides a specific method as shown in Fig. 2, where the method comprises:
step 201, entering a virtual reality space, and receiving, from a user, an instruction to enable bullet comment display.

Alternatively, the virtual reality space may be a shared virtual reality space that is accessible to multiple users. For example, each user in the shared virtual reality space can view the same VR live content, and what the users present to each other is a virtual character, and these users can send bullet comments to interact with other users in the process of watching the VR live, and these users can view bullet comment contents sent by different users in the bullet comment display region in the shared virtual reality space, thereby achieving the purpose of viewing the same bullet comment information display content while watching the same VR live in the same shared virtual reality space.

The bullet comment information can be sent by a user by typing and editing on a virtual keyboard, so that this process will consume a certain operation duration, and increases the user's operation amount. Accordingly, the embodiment provides an optional manner of inputting bullet comment information through voice. Namely, the VR device, in response to a received voice input instruction of the bullet comment, can firstly acquire voice information inputted by the user, then perform voice recognition on the voice information to obtain character information, and further send the bullet comment information according to the character information recognized by the voice. In this optional manner, the bullet comment information can be inputted through voice, which can effectively improve the input efficiency of the bullet comment information, saving the user's operation duration and reducing the user's operation amount, and then improving the VR usage experience of the user.

For example, in the process that a user watches a live VR concert, if the user needs to participate in bullet comment interactions, a voice input instruction of the bullet comment can be triggered by means of focus positioning, handle rays and the like, and then inputting bullet comment information through voice is triggered. The VR device will acquire voice information inputted by the user, and perform voice recognition on the voice information inputted by the user to obtain character information, and then automatically stream the character information recognized by the voice to a screen, to present the effect of displaying characters while speaking. The user can further select to edit the displayed voice recognition characters or directly send the bullet comment and the like containing the character information, and the sent bullet comment information is processed at the server.

Step 202, requesting a server to acquire bullet comment information to be displayed, and storing the bullet comment information into a preset queue.

Optionally, the user sending the bullet comment information may include: different users in a same room, and/or users in different rooms. For example, the server receives bullet comment information sent by different users in the same live room and/or users in different live rooms with respect to the same VR live content, and then, according to bullet comment requests of these users (the VR device sends bullet comment acquisition requests of the VR live to the server), the bullet comment information is sent to these users in the form of a common screen for bullet comment interactions. In this optional manner, the bullet comment interactions between different users in the same live room and/or users in different live rooms can be realized.

In practical applications, perhaps a large amount of bullet comment information will be received in a short time, but the size of the bullet comment display region is limited, so that the received bullet comment information can be cached in a preset queue, according to a reception time sequence, and the bullet comment information can be extracted according to the storage sequence in the queue when the bullet comment information is displayed subsequently. In this optional manner, the pressure when a large amount of bullet comments are displayed instantaneously can be effectively alleviated.
step 203, sequentially extracting a preset number of bullet comment information from the preset queue according to a time sequence of the bullet comment to be displayed.

The preset number can be preset according to actual needs, such as a preset fixed number, or a preset number suitable for the current bullet comment scene, which is calculated from comprehensive analyses according to the size of the bullet comment display region and/or the number of trajectories, in conjunction with the number of bullet comments in the preset queue, and the like.
step 204, determining a bullet comment display region in the virtual reality space according to a position and size of a content presentation region in the virtual reality space.

The bullet comment display region and the content presentation region can be respectively located in different planes of the virtual reality space, or respectively located in non-overlapping areas of the same plane of the virtual reality space. For example, a plurality of elements such as a stage element, a venue equipment element, a background element, and a bullet comment display region element are placed at respective corresponding region positions in the virtual reality space to be presented, to present a three-dimensional space presentation effect. Compared with the existing scheme (such as in a VR scene of a simulated movie theater, bullet comments are displayed while displaying video content on a virtual projection screen), the present embodiment can utilize existing capabilities of the virtual reality device to make a space scheme for viewing VR content (such as VR live, or VR video, or VR game, etc.) and bullet comment interactions in three dimensions of X, Y, Z axes, and can bring a unique watching experience completely different from the watching effect of a traditional mobile phone terminal or a Personal Computer (PC) terminal for a user.

For example, a maximum width of the bullet comment display region may be set according to a width of the live content presentation region of the VR live, so that the maximum width is not greater than the width of the live content presentation region. In this optional manner, the maximum width of the bullet comment display region does not exceed the width of live content presentation region, so that the user can view corresponding bullet comment content as conveniently as possible in the process of watching the VR live, reducing angle readjustment for viewing the bullet comments, and improving the VR live watching experience of the user.

Illustratively, the step 204 may specifically include: setting the bullet comment display region according to a corresponding preset associated position of the content presentation region in the virtual reality space, and setting a size of the bullet comment display region according to the size of the content presentation region.

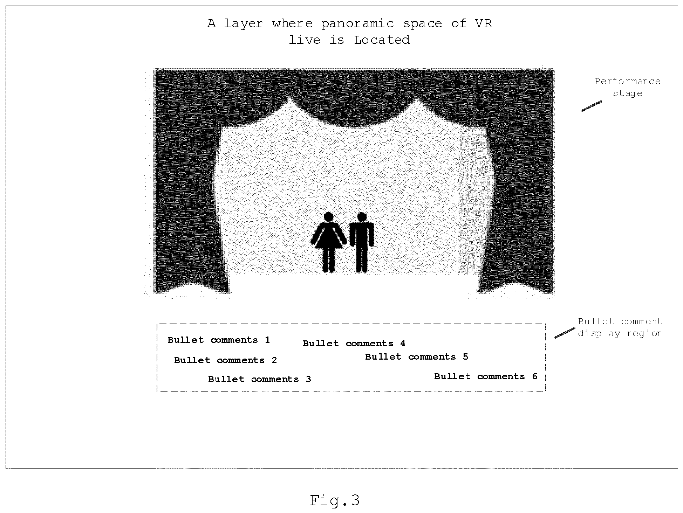

For example, as shown in Fig. 3, the VR live is a concert, so that the maximum width of the bullet comment display region may be set according to a width of a performance stage of the VR live, such that the maximum width is not greater than the width of the performance stage, and both sides of the bullet comment display region may be set to be semi-transparent and faded out. The bullet comment display region is under the performance stage, and each bullet comment content may or may not carry a user icon and/or user identification. In this optional manner, the maximum width of bullet comment display region does not exceed the width of performance stage, so that the user can view corresponding bullet comment content as conveniently as possible in the process of watching the VR live of the concert, reducing angle readjustment for viewing the bullet comments, and improving the VR live watching experience of the user.
step 205, displaying the bullet comment information extracted from the preset queue in the bullet comment display region.

In this embodiment, there may be multiple options for the scheme of displaying the bullet comment information, and as an option, in the process of displaying the bullet comment information in the bullet comment display region, it may specifically include: while displaying the bullet comment information in the bullet comment display region, highlighting a virtual character of a target user in the virtual reality space, wherein the target user can be a sending user corresponding to the currently displayed bullet comment information.

There may be multiple options for highlighting the virtual character, such as illuminating/flashing the virtual character, displaying a specific mark on a head of the virtual character, or highlighting a user name and/or icon displayed on the head of the virtual character.

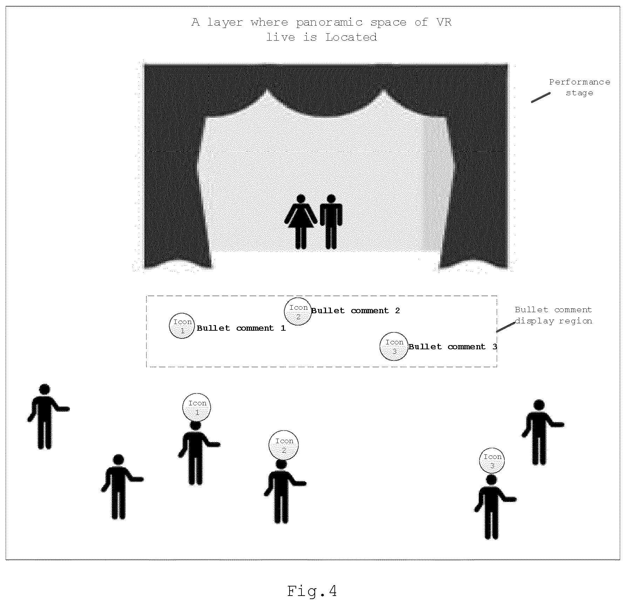

For example, as shown in Fig. 4, the displayed bullet comment information may include not only bullet comment content but also the icon of the user who correspondingly sends the bullet comment. When bullet comment 1, bullet comment 2, and bullet comment 3 are currently displayed, target user virtual characters who respectively send the three bullet comments may be determined from the virtual characters on the venue, and then respective icons are displayed above the three target user virtual characters, while respective icons of other user virtual characters may temporarily not be displayed, until bullet comment information sent by the user himself is displayed. In this optional manner, the user who views the bullet comments can be timely notified of by which users the three bullet comments are sent, thereby timely locking those users needing further communication in the virtual reality space, to satisfy more user demands, and further improving the VR live usage experience of the user.

As another alternative, the process of displaying the bullet comment information in the bullet comment display region may specifically further include: displaying bullet comment content and a user icon and/or user identification respectively corresponding to the bullet comment content in the bullet comment display region, and simultaneously displaying the user icon and/or the user identification of each user virtual character in the virtual reality space.

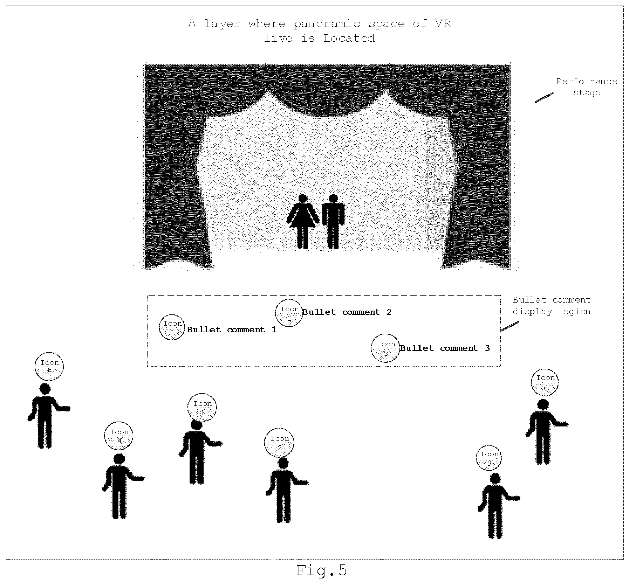

For example, as shown in Fig. 5, the displayed bullet comment information may include not only the bullet comment content but also the user icon corresponding to the user sending the bullet comment, and respective corresponding user icons may be displayed on the heads of the virtual characters on the venue. In this optional manner, the user viewing the bullet comments can timely know by which users the three bullet comments are sent by comparing the user icons, thereby timely locking those users needing further communication in the virtual reality space, to satisfy more user demands.

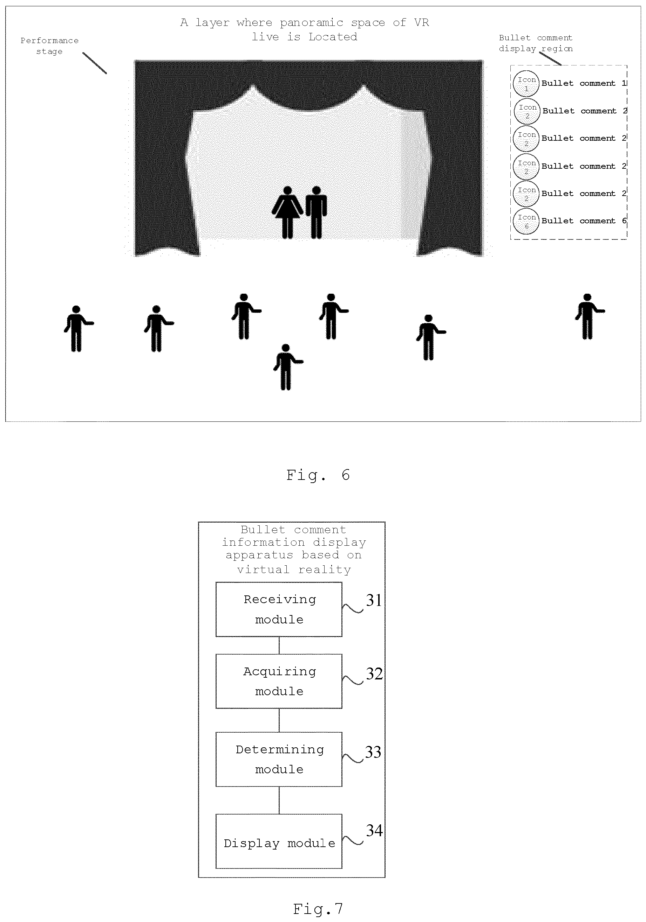

As yet another alternative, the process of displaying bullet comment information in the bullet comment display region may specifically include: displaying the bullet comment information in a form of a scroll list in the bullet comment display region. For example, as shown in Fig. 6, on the right side of the performance stage, the bullet comment information sent by different users is displayed in the form of a scroll list, and user icons of the users sending the bullet comment information can be displayed together, so that the users viewing the bullet comments can timely know by which users the bullet comments are sent. In this optional manner of displaying the bullet comment information in the form of a scroll list, bullet comment information from different users can be clearly displayed, and even if a large amount of bullet comment information is received in a short time, unlike the traditional manner in which huge amounts of bullet comments flood over the screen, this manner in this embodiment also enables the user to clearly know the bullet comment information content.

As yet another alternative, the process of displaying bullet comment information in the bullet comment display region may specifically include: scrolling the bullet comment information displayed in the bullet comment display region toward a preset region in the virtual reality space, and displaying the scrolled bullet comment information in the preset region. Illustratively, the preset region may be a floor region, a ceiling region, a wall region, or other specific regions in the virtual reality space.

For example, in the VR live with a performance stage, the bullet comment information to be displayed in the bullet comment display region under the performance stage is scrolled toward a floor region connected with the performance stage in the virtual reality space, and the scrolled bullet comment information is displayed on the floor region, thereby presenting an effect that the bullet comments on the stage side are scrolled toward the floor, which is equivalent to enlargement of the display range of the bullet comment display region, thereby providing an immersive bullet comment presentation mode capable of fusing with the virtual reality space, making the bullet comment presentation effect more dazzle cool, and more easily improving the VR usage experience of the user.

In order to highlight the immersive bullet comment presentation effect, further optionally, display transparency of the virtual character of the user in the preset region can be adjusted, so that a body part of the virtual character is more transparent, and the bullet comment information displayed in a scrolling manner in the preset region is more obvious. For example, the bullet comment information displayed in the bullet comment display region under the performance stage is scrolled toward the floor region connected with the performance stage in the virtual reality space, and the scrolled bullet comment information is displayed on the floor region, and the display transparency of the virtual character of the user on the floor region is adjusted, so that the body part of the virtual character on the floor region is more transparent, and the bullet comment information displayed in a scrolling manner on the floor region is more obvious.

As yet another alternative, the process of displaying bullet comment information in the bullet comment display region may specifically include: highlighting the bullet comment information sent by the user himself in the bullet comment display region. The highlighting scheme can be in various forms, such as bold font, underline font, tilt font, bordered, added with user name/icon, etc., or added with the identification of "me", "myself", etc. In this optional manner, the user knows that the bullet comment information sent by himself has been successfully displayed in a common screen, and then knows that his bullet comment information has been successfully sent, thereby improving the VR usage experience of the user.

It should be noted that, the above several alternatives of displaying the bullet comment information may be combined with each other, and specifically, may be selected and combined according to actual needs, so as to meet the requirements of different application scenarios.

Compared with the prior art, this embodiment can provide bullet comment interactive demands for users in the process of watching VR live and the like. With the technical solution in the embodiment, users in the virtual reality environment are enabled to experience bullet comment interactive services in the process of watching VR live and the like, and are enabled to participate in bullet comment interactions in real time with other users together, improving the VR usage experience of the users. Moreover, the bullet comment display region can be an independent presentation region in the virtual reality space, and does not have positional interference with other elements in the virtual reality scene, thereby bringing stronger science and technology feeling for the users. The bullet comment information can blend in better with the virtual reality space, which improves the user's sense of immersion and improves the VR usage experience of the user.

Further, as a specific implementation of the method shown in Fig. 1 and Fig. 2, the embodiment provides a bullet comment information display apparatus based on virtual reality, as shown in Fig. 7, comprising: a receiving module 31, an acquiring module 32, a determining module 33, and a display module 34.

The receiving module 31 is configured to, enter a virtual reality space, and receive, from a user, an instruction to enable display bullet comment.

The acquiring module 32 is configured to, acquire bullet comment information to be displayed.

The determining module 33 is configured to, determine a bullet comment display region in the virtual reality space, wherein the bullet comment display region and a content presentation region for the virtual reality are respectively located at different region positions in the virtual reality space.

The display module 34 is configured to, display the bullet comment information in the bullet comment display region.

In a specific application scenario, the virtual reality space is a shared virtual reality space that is accessible by multiple users.

In a specific application scenario, optionally, the different region positions comprise: non-overlapping regions of a same plane of the virtual reality space, or different planes of the virtual reality space.

In a specific application scenario, the determining module 33 is specifically configured to determine the bullet comment display region based on a position and size of the content presentation region.

In a specific application scenario, the determining module 33 is further specifically configured to set the bullet comment display region according to a preset associated position of the content presentation region in the virtual reality space, and set a size of the bullet comment display region according to a presentation size of the content presentation region.

In a specific application scenario, the display module 34 is specifically configured to highlight a virtual character of a target user in the virtual reality space while displaying the bullet comment information in the bullet comment display region, wherein the target user is a sending user corresponding to the currently displayed bullet comment information.

In a specific application scenario, the display module 34 is further configured to display bullet comment content and a user icon and/or user identification respectively corresponding to the bullet comment content in the bullet comment display region, and simultaneously display the user icon and/or user identification of a virtual character of each user in the virtual reality space.

In a specific application scenario, the display module 34 is further specifically configured to scroll the bullet comment information displayed in the bullet comment display region toward a preset region in the virtual reality space, and display the scrolled bullet comment information in the preset region.

In a specific application scenario, optionally, the preset region is a floor region in the virtual reality space.

In a specific application scenario, the display module 34 is further specifically configured to adjust display transparency of a virtual character of the user in the preset region.

In a specific application scenario, the display module 34 is further specifically configured to display the bullet comment information in a form of a scroll list in the bullet comment display region.

In a specific application scenario, the acquiring module 32 is specifically configured to request a server to acquire the bullet comment information, and store the bullet comment information into a preset queue; according to a time sequence of the bullet comment to be displayed, extract a preset number of bullet comment information from the preset queue in sequence;
correspondingly, the display module 34 is specifically further configured to display the bullet comment information extracted from the preset queue in the bullet comment display region.

In a specific application scenario, the display module 34 is further specifically configured to highlight the bullet comment information sent by the user in the bullet comment display region.

In a specific application scenario, optionally, the users sending the bullet comment information comprise: different users in a same room, and/or users in different rooms.

It should be noted that, other corresponding descriptions of the functional units involved in the bullet comment information display apparatus based on virtual reality provided in this embodiment may refer to the corresponding descriptions in Fig. 1 and Fig. 2, and are not repeated herein.

Based on the method shown in Fig. 1 and Fig. 2, correspondingly, the embodiment further provides a computer-readable storage medium having thereon stored a computer program, which, when executed by a processor, implements the bullet comment information display method based on virtual reality shown in Fig. 1 and Fig. 2.

Based on such understanding, the technical solution of the present disclosure may be embodied in the form of a software product, which may be stored in a non-volatile storage medium (which may be a CD-ROM, a U-disk, a removable hard disk, etc.), and comprises several instructions for enabling a computer device (which may be a personal computer, a server, or a network device, etc.) to execute the method of the various implementation scenarios of the present disclosure.

Based on the foregoing method shown in Fig. 1 and Fig. 2 and the virtual device embodiment shown in Fig. 7, to achieve the foregoing objective, an embodiment of the present disclosure further provides an electronic device, which may specifically be a virtual reality device, such as a VR head-mounted device, comprising a storage medium and a processor; the storage medium configured to store a computer program; and the processor configured to execute the computer program to implement the bullet comment information display method based on virtual reality as shown in Fig. 1 and Fig. 2.

Optionally, the entity device may further include a user interface, a network interface, a camera, a Radio Frequency (RF) circuit, a sensor, an audio circuit, a WI-FI module, and the like. The user interface may include a display, an input unit such as a Keyboard, etc., and an optional user interface may also include a USB interface, a card reader interface, etc. The network interface may optionally include a standard wired interface, a wireless interface (e.g., WI-FI interface), etc.

It will be understood by those skilled in the art that, the above-described entity device structure provided in the present embodiment does not constitute a limitation to the entity device, but may include more or fewer components, or combine some components, or arrange different components.

The storage medium can also comprise an operating system and a network communication module. The operating system is a program that manages hardware and software resources of the entity device, and supports operations of the information processing program as well as other software and/or programs. The network communication module is configured to realize communication among components inside the storage medium, and communication with other hardware and software in the information processing entity device.

Through the description of the above embodiments, those skilled in the art will clearly understand that the present disclosure may be implemented by software plus an essential general hardware platform, and may also be implemented by hardware. The technical solution of the present embodiment can provide bullet comment interactive demands in the process of watching VR live and the like for users, so that the users in the virtual reality environment are enabled to experience bullet comment interactive services in the process of watching the VR live and the like, and are enabled to participate in bullet comment interactions in real time with other users together. Moreover, the bullet comment display region can be an independent presentation region in the virtual reality space, and does not have positional interference with other elements in the virtual reality scene, thereby bringing stronger science and technology feeling for the users. The bullet comment information can blend in better with the virtual reality space, which improves the user's sense of immersion and improves the VR usage experience of the user.

It is noted that, in this specification, relational terms such as "first" and "second," and the like, are used only to distinguish one entity or action from another entity or action without necessarily requiring or implying any actual such relationship or order between such entities or actions. Also, the terms "comprises," "include" or any other variation thereof, are intended to cover a non-exclusive inclusion, such that a process, method, article, or apparatus that comprises a list of elements does not include only those elements but may include other elements not expressly listed or inherent to such process, method, article, or apparatus. Without further limitation, an element defined by the phrase "comprising an ··· ···" does not exclude the presence of other identical elements in the process, method, article, or apparatus that comprises the element.

The above only describes particular embodiments of the present disclosure, so as to enable those skilled in the art to understand or implement the present disclosure. Various modifications to these embodiments will be readily apparent to those skilled in the art, and the generic principles defined herein may be applied to other embodiments without departing from the spirit or scope of the present disclosure. Thus, the present disclosure is not intended to be limited to the embodiments shown herein but is to be accorded the widest scope consistent with the principles and novel features disclosed herein.

## Claims

1. A bullet comment information display method based on virtual reality, **characterized by** comprising:
entering a virtual reality space, and receiving, from a user, an instruction to enable bullet comment display;
acquiring bullet comment information to be displayed;
determining a bullet comment display region in the virtual reality space, wherein the bullet comment display region and a content presentation region for the virtual reality are respectively located at different region positions in the virtual reality space; and
displaying the bullet comment information in the bullet comment display region.

2. The method according to claim 1, **characterized in that**, the virtual reality space is a shared virtual reality space that is accessible by multiple users.

3. The method according to claim 1, **characterized in that**, the different region positions comprise: non-overlapping regions of a same plane of the virtual reality space, or different planes of the virtual reality space.

4. The method according to claim 3, **characterized in that**, the determining a bullet comment display region in the virtual reality space, specifically comprises:
determining the bullet comment display region based on a position and size of the content presentation region.

5. The method according to claim 4, **characterized in that**, the determining the bullet comment display region based on a position and size of the content presentation region, specifically comprises:
setting the bullet comment display region according to a preset associated position of the content presentation region in the virtual reality space, and setting a size of the bullet comment display region according to a presentation size of the content presentation region.

6. The method according to claim 1, **characterized in that**, the displaying the bullet comment information in the bullet comment display region, comprises:
highlighting a virtual character of a target user in the virtual reality space while displaying the bullet comment information in the bullet comment display region, wherein the target user is a sending user corresponding to the currently displayed bullet comment information.

7. The method according to claim 1, **characterized in that**, the displaying the bullet comment information in the bullet comment display region, comprises:
displaying bullet comment content and a user icon and/or user identification respectively corresponding to the bullet comment content in the bullet comment display region, and simultaneously displaying the user icon and/or user identification of a virtual character of each user in the virtual reality space.

8. The method according to claim 1, **characterized in that**, the displaying the bullet comment information in the bullet comment display region, comprises:
scrolling the bullet comment information displayed in the bullet comment display region toward a preset region in the virtual reality space, and displaying the scrolled bullet comment information in the preset region.

9. The method according to claim 8, **characterized in that**, the preset region is a floor region in the virtual reality space.

10. The method according to claim 8, **characterized in that**, the displaying the bullet comment information in the bullet comment display region, further comprises:
adjusting display transparency of a virtual character of the user in the preset region.

11. The method according to claim 1, **characterized in that**, the displaying the bullet comment information in the bullet comment display region, comprises:
displaying the bullet comment information in a form of a scroll list in the bullet comment display region.

12. The method according to claim 1, **characterized in that**, the acquiring bullet comment information to be displayed, specifically comprises:
requesting a server to acquire the bullet comment information, and storing the bullet comment information into a preset queue;
according to a time sequence of the bullet comment to be displayed, extracting a preset number of bullet comment information from the preset queue in sequence; and
the displaying the bullet comment information in the bullet comment display region, specifically comprises:
displaying the bullet comment information extracted from the preset queue in the bullet comment display region.

13. The method according to claim 1, **characterized in that**, the displaying the bullet comment information in the bullet comment display region, specifically comprises:
highlighting the bullet comment information sent by the user in the bullet comment display region.

14. The method according to any of claims 1 to 13, **characterized in that**, the users sending the bullet comment information comprise: different users in a same room, and/or users in different rooms.

15. A bullet comment information display apparatus based on virtual reality, comprising:
a receiving module configured to, enter a virtual reality space, and receive, from a user, an instruction to enable bullet comment display;
an acquiring module configured to, acquire bullet comment information to be displayed;
a determining module configured to, determine a bullet comment display region in the virtual reality space, wherein the bullet comment display region and a content presentation region for the virtual reality are respectively located at different region positions in the virtual reality space; and
a display module configured to, display the bullet comment information in the bullet comment display region.

16. A computer-readable storage medium having thereon stored a computer program, which, when executed by a processor, implements the method according to any of claims 1 to 14.

17. An electronic device, comprising a storage medium, a processor, and a computer program stored on the storage medium and executable on the processor, **characterized in that**, the processor implements the method according to any of claims 1 to 14 when executing the computer program.
